(19) Europäisches Patentamt
European Patent Office
Office européen des brevets

(11) **EP 4 633 087 A1**

(12) **EUROPEAN PATENT APPLICATION**

(43) Date of publication:
**15.10.2025 Bulletin 2025/42**

(51) International Patent Classification (IPC):
***H04L 9/40*** *(2022.01)*

(21) Application number: **25166054.4**

(52) Cooperative Patent Classification (CPC):
**H04L 63/08**

(22) Date of filing: **25.03.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.04.2024 US 202418632512
11.04.2024 US 202418632537**

(71) Applicant: **The Boeing Company
Arlington, VA 22202 (US)**

(72) Inventors:
• **TROY, James J.**
**Arlington, 22202 (US)**
• **ESPOSITO, Christopher**
**Arlington, 22202 (US)**
• **TSKHVARADZE, Vladimir**
**Arlington, 22202 (US)**

(74) Representative: **Bugnion S.p.A. - US1
Bugnion S.p.A.
Via Pancaldo 68
37138 Verona (IT)**

(54) **SYSTEMS AND METHODS FOR MANAGING ACCESS TO THREE-DIMENSIONAL DATA**

(57) A method for managing access to three-dimensional data includes receiving input data associated with a user access request for a data set associated with a three-dimensional model to be rendered. The method includes selecting a rendering server from a plurality of rendering servers based at least on a load balancing score for each of the plurality of rendering servers. The load balancing score is based at least on a graphics processing parameter for each of the plurality of rendering servers. The method also includes communicating a request to the selected rendering server to initiate a rendering of the three-dimensional model for display on a user device via a client application.

FIG. 4

## Description

### FIELD OF THE DISCLOSURE

The subject disclosure is generally related to systems and methods for managing access to three-dimensional data.

### BACKGROUND

As more computing services are performed in a web-based environment, it is increasingly important to be able to provide those services in a secure, reliable manner. Such computing services include data associated with three-dimensional models. For example, three-dimensional data can represent a three-dimensional model of an aircraft, automobile, or other vehicle. These data sets can be relatively large, and the computer programs that render the model from the data can be relatively resource intensive. As such, it can be difficult to provide a rendered three-dimensional model in a web-based environment.

Additionally, three-dimensional data has distinct challenges for secure online access. For example, an entity providing three-dimensional data often wants to maintain confidentiality for the three-dimensional model itself. This can give rise to data security issues, such as copying three-dimensional data onto client computers outside of a controlled environment. Commonly used data security methods (e.g., encryption and security through obscurity) can be insufficient, particularly since polygonal data in a graphics pipeline is often not encrypted and can be acquired.

For efficient, secure provisioning of three-dimensional data in a web-based environment, it can be beneficial to provide the three-dimensional model without placing the associated three-dimensional data on remote or uncontrolled computers. Certain existing data security methods (e.g., texture-based techniques such as imposters) can be used, but there remains a need for a computing infrastructure to support use of those security methods in a production environment.

### SUMMARY

In a particular implementation, a method includes receiving input data associated with a user access request for a data set associated with a three-dimensional model to be rendered. The method includes selecting a rendering server from a plurality of rendering servers based at least on a load balancing score for each of the plurality of rendering servers. The load balancing score is based at least on a graphics processing parameter for each of the plurality of rendering servers. The method also includes communicating a request to the selected rendering server to initiate a rendering of the three-dimensional model for display on a user device via a client application.

In another particular implementation, a device includes one or more processors configured to receive input data associated with a user access request for a data set associated with a three-dimensional model to be rendered. The one or more processors are configured to select a rendering server from a plurality of rendering servers based at least on a load balancing score for each of the plurality of rendering servers. The load balancing score is based at least on a graphics processing parameter for each of the plurality of rendering servers. The one or more processors are also configured to communicate a request to the selected rendering server to initiate a rendering of the three-dimensional model for display on a user device via a client application.

In another particular implementation, a non-transitory computer-readable medium stores instructions that, when executed by one or more processors, cause the one or more processors to receive input data associated with a user access request for a data set associated with a three-dimensional model to be rendered. The instructions cause the one or more processors to select a rendering server from a plurality of rendering servers based at least on a load balancing score for each of the plurality of rendering servers. The load balancing score is based at least on a graphics processing parameter for each of the plurality of rendering servers. The instructions also cause the one or more processors to communicate a request to the selected rendering server to initiate a rendering of the three-dimensional model for display on a user device via a client application.

In another particular implementation, a device includes means for receiving input data associated with a user access request for a data set associated with a three-dimensional model to be rendered. The device also includes means for selecting a rendering server from a plurality of rendering servers based at least on a load balancing score for each of the plurality of rendering servers, The load balancing score is based at least on a graphics processing parameter for each of the plurality of rendering servers. The device also includes means for communicating a request to the selected rendering server to initiate a rendering of the three-dimensional model for display on a user device via a client application.

In another particular implementation, a method includes receiving input data associated with a user request from a user for a data set associated with a three-dimensional model to be rendered. The method includes communicating the user request to a rendering server. The rendering server is selected from a plurality of rendering servers based at least on a load balancing score for each of the plurality of rendering servers. The load balancing score is based at least on a graphics processing parameter for each of the plurality of rendering servers. The method includes receiving data associated with a rendered version of the three-dimensional model from the rendering server. The method also includes communicating the data to a user device for display to the user.

In another particular implementation, a device includes one or more processors configured to receive input data associated with a user request from a user for a data set associated with a three-dimensional model to be rendered. The one or more processors are configured to communicate the user request to a rendering server. The rendering server is selected from a plurality of rendering servers based at least on a load balancing score for each of the plurality of rendering servers. The load balancing score is based at least on a graphics processing parameter for each of the plurality of rendering servers. The one or more processors are configured to receive data associated with a rendered version of the three-dimensional model from the rendering server. The one or more processors are also configured to communicate the data to a user device for display to the user.

In another particular implementation, a non-transitory computer-readable medium stores instructions that, when executed by one or more processors, cause the one or more processors to receive input data associated with a user request from a user for a data set associated with a three-dimensional model to be rendered. The instructions cause the one or more processors to communicate the user request to a rendering server. The rendering server is selected from a plurality of rendering servers based at least on a load balancing score for each of the plurality of rendering servers. The load balancing score is based at least on a graphics processing parameter for each of the plurality of rendering servers. The instructions cause the one or more processors to receive data associated with a rendered version of the three-dimensional model from the rendering server. The instructions also cause the one or more processors to communicate the data to a user device for display to the user.

In another particular implementation, a device includes means for receiving input data associated with a user request from a user for a data set associated with a three-dimensional model to be rendered. The device includes means for communicating the user request to a rendering server. The rendering server is selected from a plurality of rendering servers based at least on a load balancing score for each of the plurality of rendering servers. The load balancing score is based at least on a graphics processing parameter for each of the plurality of rendering servers. The device includes means for receiving data associated with a rendered version of the three-dimensional model from the rendering server. The device also includes means for communicating the data to a user device for display to the user.

## BRIEF DESCRIPTION OF THE DRAWINGS

FIG. 1 is a block diagram of an example system for managing access to three-dimensional data, in accordance with some examples of the subject disclosure.

FIG. 2 is a block diagram of an example system for managing three-dimensional data visualization, in accordance with some examples of the subject disclosure.

FIG. 3 illustrates an exemplary user interface depicting a rendered version of a three-dimensional model, in accordance with some examples of the subject disclosure.

FIG. 4 is a flow chart of an example method for managing access to three-dimensional data, in accordance with some examples of the subject disclosure.

FIG. 5 is a flow chart of an example method for managing three-dimensional data visualization, in accordance with some examples of the subject disclosure.

FIG. 6 is a block diagram of a computing environment including a computing device configured to support aspects of computer-implemented methods and computer-executable program instructions (or code), in accordance with some examples of the subject disclosure.

## DETAILED DESCRIPTION

The systems and methods disclosed herein enable web-based three-dimensional streaming for large-scale datasets by providing secure access to three-dimensional data, back-end data management that can scale to address a relatively large numbers of users, and, in some aspects, plug-in modules to connect a web-based application to external data and computational resources.

The secure, web-based applications disclosed herein can enable manufacturing technicians, maintenance technicians, repair technicians, and other people to access three-dimensional data from lower-end display hardware (e.g., smartphones, tablets, etc.) on-location when network access (wired or wireless) is available. For example, such personnel can access the three-dimensional data for a vehicle when they are located on or near the vehicle using a wide range of computing devices including laptops, tablets, and smartphones.

A technical advantage of the subject disclosure is the enablement of efficient, secure data management of three-dimensional data. For example, large-scale three-dimensional data sets can be analyzed across a group of vehicles, identifying commonalities and differences among the vehicles.

Another technical advantage of the subject disclosure is the enablement of efficient server selection and load balancing among a plurality of servers for the purposes of managing access to three-dimensional data. For example, the systems and methods disclosed herein enable load balancing based on graphics processing metrics.

Another technical advantage of the subject disclosure is an improved user interface for accessing three-dimensional data. For example, the systems and methods disclosed herein enable multiple users in multiple environments to each gain secure access to a three-dimensional data set for collaboration.

The figures and the following description illustrate specific exemplary embodiments. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

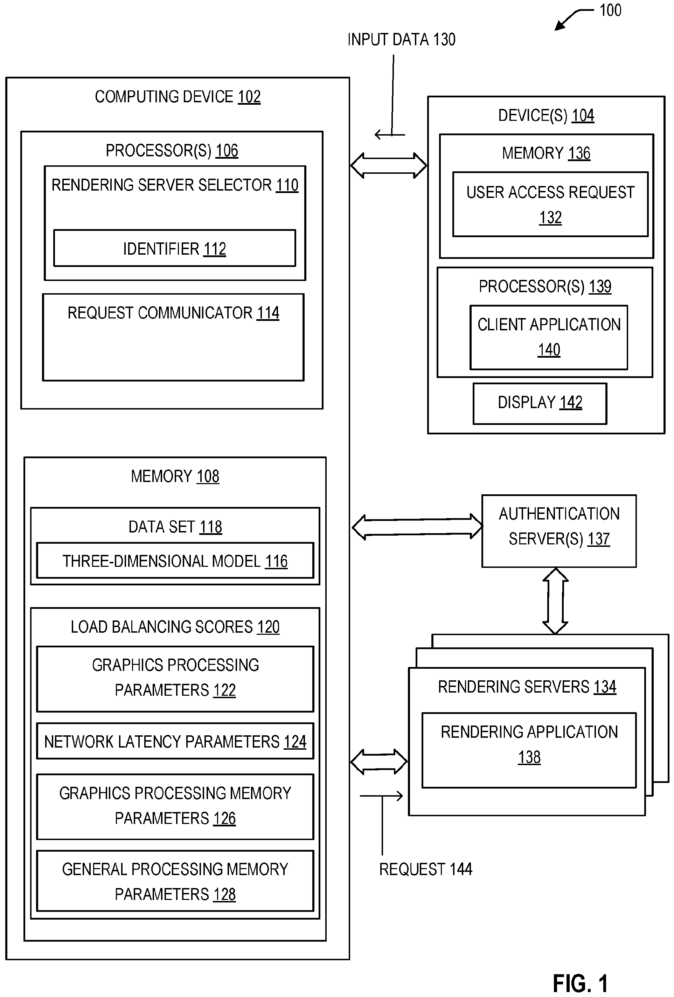

Particular implementations are described herein with reference to the drawings. In the description, common features are designated by common reference numbers throughout the drawings. As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, FIG. 1 depicts a system 100 including one or more processors ("processor(s)" 106 in FIG. 1), which indicates that in some implementations the system 100 includes a single processor 106 and in other implementations the system 100 includes multiple processors 106. For ease of reference herein, such features are generally introduced as "one or more" features and are subsequently referred to in the singular or optional plural (as indicated by "(s)") unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

FIG. 1 depicts an example system 100 for managing access to three-dimensional data, in accordance with some examples of the subject disclosure. In some implementations, the system 100 includes a computing device 102 configured to communicate with one or more devices 104, one or more authentication servers 137, and/or a plurality of rendering servers 134. The computing device 102 includes one or more processors 106 coupled to a memory 108.

In some implementations, the device(s) 104 can include, correspond to, or be included within one or more electronic devices used by personnel seeking access to three-dimensional data (e.g., aircraft maintenance personnel, vehicle designers, etc.). The device(s) 104 can include, correspond to, or be included within an electronic device that includes one or more processors 139 coupled to a memory 136 storing one or more user access requests 132. The user access request 132 can include information identifying the user, the device(s) 104, the three-dimensional data the user is seeking access to, a particular portion of the three-dimensional data, other appropriate information identifying the user's request for three-dimensional data, or some combination thereof.

In some implementations, the processor(s) 139 can include a client application 140. The client application 140 can be configured to receive data associated with a rendered three-dimensional model for output to a display 142 of the device 104. The display 142 can be configured to display some or all of the data associated with the rendered three-dimensional model to a user.

In some implementations, each of the rendering servers 134 can include, correspond to, or be included within one or more electronic devices that include a rendering application 138. The rendering application 138 can be configured to render a three-dimensional model from three-dimensional data. As described in more detail below, each of the rendering servers 134 can be configured to communicate with the computing device 102, one or more device 104, or a combination thereof.

In some implementations, the authentication server(s) 137 can be configured to authenticate a user's access credentials to one or more portions of the system 100. For example, the authentication server(s) 137 can be configured to authenticate a user's ability to access the system 100, a user's ability to access a particular portion of the data set 118 described below, a particular rendering server 134, etc. In some aspects, the authentication server(s) 137 can include one or more electronic devices configured to be an Active Directory server, a lightweight directory access protocol (LDAP) server, etc.

In some implementations, the computing device 102 can be configured to receive, from the device(s) 104, input data 130 associated with a user access request 132 for a data set 118 associated with a three-dimensional model 116 to be rendered. For example, the device(s) 104 can send the input data 130 associated with the user access request 132 to access a three-dimensional model of an aircraft. Identifying features of the user access request 132 in the input data 130 may include access credentials (e.g., username, password, etc.), the aircraft for which the model is requested, a particular subset of model requested (e.g., a wiring view, structural view, etc.), a particular portion of the three-dimensional model (e.g., a particular section of the aircraft), etc. The user access request 132 can include data associated with this information, which can be provided to the computing device 102 as the input data 130.

The processor(s) 106 of the computing device 102 can include a rendering server selector 110 and a request communicator 114. The rendering server selector 110 can be configured to determine an identifier 112 of a particular rendering server from the plurality of rendering servers 134 based at least on a load balancing score 120 for each of the plurality of rendering servers 134. The load balancing score 120 is based at least on a graphics processing parameter 122 for each rendering server of the plurality of rendering servers 134. The load balancing score 120 and the graphics processing parameter 122 can be stored at the memory 108.

In some aspects, the request communicator 114 can be configured to communicate a request 144 to the selected rendering server 134. In a particular aspect, the request communicator 114 can be configured to communicate the request 144 to the particular rendering server 134 associated with the identifier 112 to initiate a rendering of the three-dimensional model 116 for presentation to the display 142 via the client application 140.

In some aspects, the system 100 can be configured to enable load balancing among a plurality of special-purpose, graphical processing unit (GPU)-based rendering servers 134. The processor(s) 106 can be configured to select a particular rendering server based at least on a graphics processing parameter 122 for each of the rendering servers 134. In some aspects, the graphics processing parameter 122 can include data associated with one or more resource parameters associated with the graphics processing capabilities of the rendering servers 134. For example, the graphics processing parameter 122 can include data identifying a peak GPU processing capacity, a current GPU memory usage, etc.

In the same or alternative aspects, the load balancing score 120 can also be based on a network latency parameter 124 for a network coupling the rendering servers 134 and the device(s) 104, a general processing memory parameter 128 for each of the rendering servers 134, a graphics processing memory parameter 126 for each of the rendering servers 134, or a combination thereof. The network latency parameter 124 can, for example, indicate a network lag time (e.g., in milliseconds) associated with data packets moving between the computing device 102 and the rendering servers 134. The general processing memory parameter 128 can, for example, indicate the total amount of system memory (e.g., RAM) for a particular rendering server 134. The graphics processing memory parameter 126 can, for example, indicate a total amount of graphics memory for a particular rendering server 134. The load balancing score 120 can also be based on a general processing parameter. The general processing parameter can, for example, indicate a peak general-purpose processing performance rating (as opposed to a graphics processing-specific rating) of a particular rendering server 134.

In a particular aspect, the load balancing score 120 can be based on a capacity parameter for each rendering server of the plurality of rendering servers 134. The capacity parameter can indicate, for example, a total capacity of a particular feature of the rendering servers 134. For example, the capacity parameter can be associated with the general processing parameter, indicating a total capacity for general processing computer resources. As another example, the capacity parameter can be associated with the general processing memory parameter 128, indicating a total memory capacity for each of the rendering servers 134. As a further example, the capacity parameter can be associated with the graphics processing memory parameter 126, indicating the total graphics processing memory capacity for each of the rendering servers 134. As yet another example, the capacity parameter can be associated with any combination of the above examples, as well as other appropriate computing resource capacity parameters.

In the same or alternative particular aspects, the load balancing score 120 can be based on a current usage parameter for each of the plurality of rendering servers 134. The current usage parameter can indicate, for example, a current computing resource usage associated with one or more components of a particular rendering server 134. For example, the current usage parameter can be associated with the general processing parameter, indicating a current processing percentage for general processing computer resources. As another example, the current usage parameter can be associated with the general processing memory parameter 128, indicating a current memory usage for each of the rendering servers 134. As a further example, the current usage parameter can be associated with the graphics processing memory parameter 126, indicating a current graphics processing memory usage for each of the rendering servers 134. As yet another example, the current usage parameter can be associated with the network latency parameter 124, indicating a current network throughput value for the network. The current usage parameter can be associated with any combination of the above examples, as well as other appropriate current usage values for computing resources.

In operation, the processor(s) 106 can be configured to receive the input data 130 from the device(s) 104 indicating the user access request 132. The user access request 132 can indicate, for example, the user's login credentials, as well as identifying parameters for a particular three-dimensional model 116 stored at the memory 108. The processor(s) 106 can be configured to select a particular rendering server 134 from among a plurality of rendering servers to render all or a portion of the particular three-dimensional model 116. The particular rendering server is identified by the identifier 112. The rendering server selector 110 can be configured to select the particular rendering server based at least on one or more load balancing scores 120 for each of the rendering servers 134. The load balancing score 120 can be based at least on a graphics processing parameter 122 for each of the rendering servers 134, as well as potentially other computer resource-related parameters for each of the rendering servers 134.

As an illustrative example, the load balancing score $S_i$ for a particular rendering server 134 can be expressed according to the following formula, where $k_u$ is a scaling factor associated with a current usage parameter, $k_c$ is a scaling factor associated with a capacity parameter, $U_{i,j}$ is a current usage value for a particular current usage parameter $j$ for the particular rendering server $i$, and $C_{i,m}$ is a capacity value for a particular capacity parameter $m$ for the particular rendering server $i$:

$$\sum \left( k_u * U_{i,j} \right) + \sum \left( k_c / C_{i,m} \right)$$

In the above equation, the usage values $U_{i,j}$ and the capacity values $C_{i,m}$ can be expressed in units appropriate to the particular resource parameter (e.g., megabytes of memory, milliseconds of network latency, etc.). The scaling factors $k_u$ and $k_c$ can be appropriate values selected to account for system design considerations taken for a particular system implementation. For example, in a particular configuration, available graphics memory can be a stronger indicator of system performance than in other configurations. The scaling factors can be determined manually, automatically, or both. Automatic selection can be based on, for example, experimental data collected over time based on measured performed of the system 100 while in use.

As noted above, a technical advantage of the subject disclosure is an improved user interface for accessing three-dimensional data. For example, the systems and methods disclosed herein enable multiple users in multiple environments to each gain secure access to a three-dimensional data set for collaboration. To that end, in some implementations, the processor(s) 106 can also be configured to, prior to receiving the input data 130, receive user authentication information from the authentication server(s) 137. For example, the processor(s) 106 can be configured to receive user authentication information from the authentication server(s) 137 indicative of a user's right to access some or all of the system 100. In a particular aspect, the processor(s) 106 can be configured to receive the user authentication information prior to receiving the input data 130 (e.g., user authorization to access the system 100). Once the input data 130 is received, the processor(s) 106 can also be configured to communicate data associated with the user access request 132 to the authentication server(s) 137 to determine whether the user is allowed access to the requested portion of the data set 118.

In some aspects, the processor(s) 106 can also be configured to communicate authentication data to the selected rendering server 134 corresponding to the identifier 112, where the authentication data is associated with one or more objects of the three-dimensional model that can be selectively rendered based on the authentication data. For example, a user can be authorized to view some portions of the three-dimensional model 116 but not other portions. The processor(s) 106 can be configured to transmit authentication data to the rendering servers 134 indicative of a user's authorization to view some or all of the three-dimensional model 116. The rendering server 134 can then selectively render a portion of the three-dimensional model 116 based on the authentication data. In some aspects, the one or more objects of the three-dimensional model 116 can include, for example, a particular view of the three-dimensional model 116, a portion of the three-dimensional model 116, a particular part, a particular line number, a particular design state, a particular assembly state, etc.

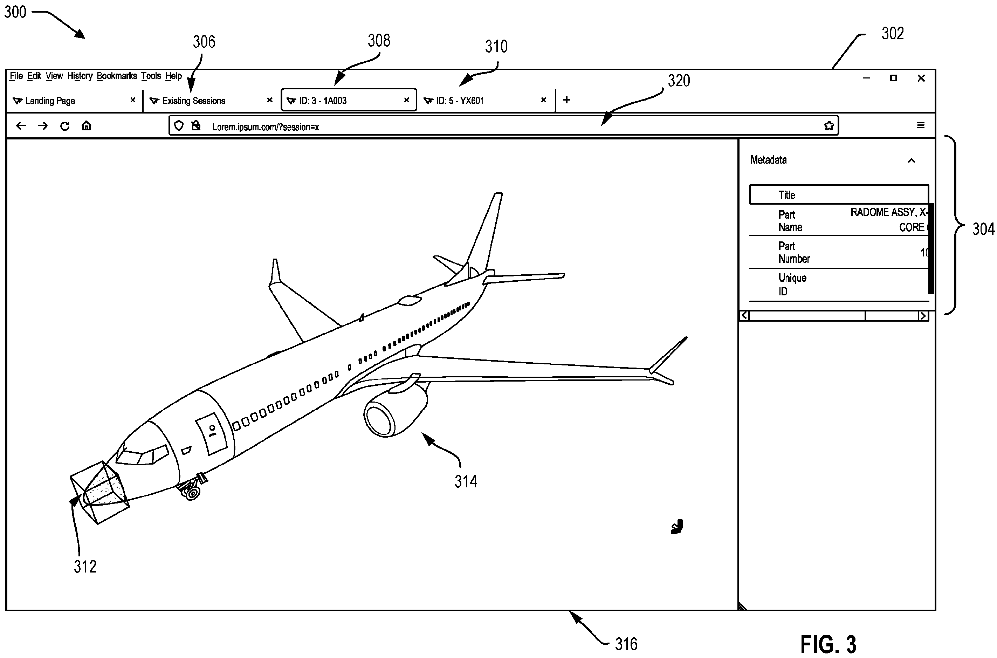

The authentication data can also be indicative of the user access request 132 describing a request for the rendering of a particular portion of the three-dimensional model 116. For example, a user can view a rendering of a full three-dimensional model 116 of an aircraft. The user can then request to view a particular portion of the three-dimensional model 116 of the aircraft in more detail (e.g., to view a particular portion of the aircraft). As described in more detail below with reference to FIG. 3, the user interface 300 can display the portion of the three-dimensional model 116 based on the user's request to view the portion of the three-dimensional model 116.

In a multi-user environment, the processor(s) 106 can be configured to authenticate the user access request 132 on a per-user basis. For example, a first user can have different authentication credentials than a second user. The processor(s) 106 can be configured to authenticate the user access request 132 based on the particular authentication credentials of a particular user.

In some implementations, the computing device 102 can be associated with, integrated into, or otherwise included in one or more electronic devices such as a server, personal computer, etc. The system 100 can also include components not illustrated in FIG. 1. For example, the computing device 102 can also include a receiver configured to receive the input data 130 from the device(s) 104. The receiver can be configured to receive the data, for example, via a computer bus. As an additional example, the system 100 can also include one or more input/output interfaces, one or more network interfaces, etc. Further, although FIG. 1 illustrates the memory 108 of the system 100 as storing certain data, more, fewer, and/or different data can be present within the memory 108 without departing from the scope of the subject disclosure.

Additionally, although FIG. 1 illustrates certain operations occurring within the computing device 102, these operations can be performed by other components of the system 100 without departing from the scope of the subject disclosure. For example, one or more components external to the computing device 102 can be configured to host or otherwise incorporate some or all of the components of the rendering server selector 110, the request communicator 114, or some combination thereof. Such component(s) can be located remotely from the computing device 102 and accessed via a network connection of the computing device 102.

Further, although FIG. 1 illustrates the computing device 102, the device(s) 104, the rendering servers 134 as separate, other configurations are possible without departing from the scope of the subject disclosure. For example, the computing device 102 and the rendering servers 134 can be integrated into one or more electronic devices configured as a server. For example, the server can be configured to host multiple virtual rendering servers on a single electronic device. As an additional example, one or more components of the computing device 102 can be distributed across a plurality of computing devices (e.g., a group of processor cores).

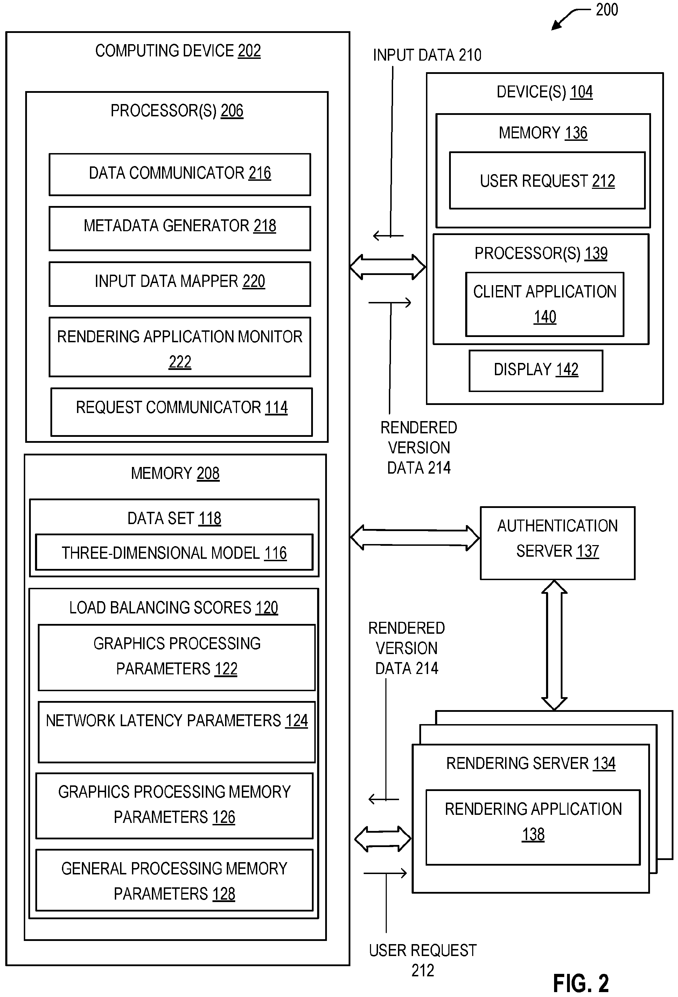

In a particular aspect, the example system 100 illustrates a load balancing server configured to manage access to three-dimensional data for one or more users at least by allowing authorized user access requests 132 for access to some or all of the data set 118 associated with the three-dimensional model 116. The system 100 can select from among a plurality of rendering servers 134 to efficiently render the three-dimensional model 116 for display at the client application 140. As described in more detail below with reference to FIG. 2, the systems and methods disclosed herein also disclose a web-based application server configured to manage access to three-dimensional data.

FIG. 2 depicts an example system 200 for managing three-dimensional data visualization, in accordance with some examples of the subject disclosure. In some implementations, the system 200 includes a computing device 202 configured to communicate with one or more devices 104, one or more authentication servers 137, a plurality of rendering servers 134, or some combination thereof. The computing device 202 includes one or more processors 206 coupled to a memory 208. In some implementations, the processor(s) 206 can include a data communicator 216, a metadata generator 218, an input data mapper 220, a rendering application monitor 222, the request communicator 114 of FIG. 1, or some combination thereof.

In some implementations, the device(s) 104 can include, correspond to, or be included within one or more electronic devices used by personnel seeking access to three-dimensional data (e.g., aircraft maintenance personnel, vehicle designers, etc.). The device(s) 104 can include, correspond to, or be included within an electronic device that includes one or more processors 139 coupled to a memory 136 storing one or more user requests 212. The user request 212 can include information identifying the user, the device(s) 104, the three-dimensional data the user is seeking access to, a particular portion of the three-dimensional data, other appropriate information identifying the user's request for three-dimensional data, or some combination thereof.

In some implementations, the computing device 202 can be configured to receive input data 210 associated with the user request 212 from a user for the data set 118 associated with the three-dimensional model 116 to be rendered. The request communicator 114 can be configured to communicate the user request 212 to the rendering server selected from the plurality of rendering servers 134 based at least on the load balancing score 120 for each of the plurality of rendering servers 134. The load balancing score 120 can be based at least on the graphics processing parameter 122 for each of the plurality of rendering servers 134. For example, the user request 212 can include data indicative of a user requesting access to a portion of the data set 118. The processor(s) 106 can be configured to communicate the user request 212 to a particular rendering server 134 selected based on a load balancing process, as described in more detail above with reference to FIG. 1.

In some implementations, the computing device 202 can also be configured to receive data associated with a rendered version of the three-dimensional model 116 from the particular rendering server 134. For example, the computing device 202 can be configured to receive data that enables display of the rendered version of the three-dimensional model 116 ("rendered version data 214"). As described above with reference to FIG. 1, the rendering server(s) 134 can be configured to render some or all of the three-dimensional model 116 based on some or all of the data set 118. The rendering server(s) 134 can communicate the rendered version data 214, indicative of the rendered version of the three-dimensional model 116, to the computing device 202. The data communicator 216 can be configured to communicate the rendered version data 214 of the three-dimensional model 116 from the selected rendering server 134.

In some aspects, the rendered version data 214 can exclude geometry data associated with the three-dimensional model 116. The geometry data can be excluded from the rendered version data 214 communicated to the computing device 202 from the rendering server 134, from the rendered version data 214 communicated to the device(s) 104 from the computing device 202, or both. One particular security concern related to hosting three-dimensional data in a web-based environment is that certain data objects can be presented to a user in a manner that compromises the data's integrity. For example, the underlying geometry data associated with the three-dimensional model 116 can be used to reverse engineer one or more components represented by the three-dimensional model 116. The system 200 can be configured such that the geometry data associated with the three-dimensional model 116 is removed from the rendered version data 214 prior to transmission.

In operation, a user can request a rendering of all or a portion of the authorized aspects of three-dimensional model 116. The computing device 202 can be configured to enable authentication of the user's access to the system 200, authentication of the user's access to the particular portion of the three-dimensional model 116 requested, request the rendering from a particular rendering server 134 selected according to a load balancing operation, and communicate the data associated with the rendered version (e.g., the rendered version data 214) to the device(s) 104 for display to the user (e.g., via the display 142).

In some aspects, the input data 210 can include data indicative of a user selection of a portion of the rendered version and the input data 210 may be updated. For example, after viewing a rendered version of the three-dimensional model 116, a user can request a new rendering of a particular portion of the three-dimensional model 116. Alternative, a user can initially request to view a rendering only of a particular portion of the three-dimensional model 116.

In such aspects, the input data mapper 220 can be configured to map the input data 210 to a unique part number. The metadata generator 218 can be configured to generate metadata associated with the unique part number and the computing device 202 can communicate the metadata to the device(s) 104. For example, if the user selects a particular part of the three-dimensional model 116, the input data mapper 220 can be configured to map the selected part to a unique part number. The processor(s) 206 can map the unique part number to a set of metadata and communicate that metadata to the device(s) 104. As illustrated in more detail below with reference to FIG. 3, the metadata can include, for example, a part number, a part name, service history associated with the unique part number, etc.

In some aspects, the rendering application monitor 222 of the processor(s) 206 can be configured to monitor the rendering application 138 of the selected rendering server 134 and, responsive to detecting that the rendering application 138 is not working (e.g., has stalled or unexpectedly stopped responding), send a signal to the rendering application 138 initiating a restart of the rendering application 138. Due to issues like unhandled exceptions or network disruptions, the rendering application 138 may occasionally stall or stop working. By monitoring the performance of the rendering application 138 (and enabling the restart of the rendering application 138), the computing device 202 can enable a more stable, efficient rendering process.

In some aspects, the processor(s) 206 can be configured to, prior to receiving the input data 210, receive user authentication information from the authentication server(s) 137. For example, the processor(s) 206 can be configured to receive user authentication information from the authentication server(s) 137 indicative of a user's right to access some or all of the system 200. In a particular aspect, the processor(s) 206 can be configured to receive the user authentication information prior to receiving the input data 210. Once the input data 210 is received, the processor(s) 206 can also be configured to communicate data associated with the user request 212 to the authentication server(s) 137 to determine whether the user is allowed access to the requested portion of the data set 118.

In such aspects, the processor(s) 206 can be configured to communicate authentication data to the selected rendering server 134. The authentication data can be associated with one or more objects of the three-dimensional model 116 that can be selectively rendered based on the authentication data.

The processor(s) 206 can also be configured to generate a shareable session that includes the data associated with the rendered version (e.g., the rendered version data 214). For example, a first user authenticated with the system 200 can request a shareable session for the purposes of collaboration with a second user. The processor(s) 206 can generate a shareable session that includes the rendered version data 214 that can be communicated to the first and second users. The processor(s) 206 can also generate data associated with an access mechanism to the shareable session. For example, the processor(s) 206 can generate a hyperlink that allows the second user to join the shareable session.

The processor(s) 206 can also be configured to receive, from the user authentication application, a second user authentication associated with a second user request from the second user for the data set 118. For example, once the second user clicks on the hyperlink, a request can be generated to authenticate the second user prior to communicating the rendered version data 214 to the second user.

In such a particular aspect, the processor(s) 206 can be configured to receive the input data 210 indicating user selection of a portion of the rendered version. The input data mapper 220 can map the input data 210 to a unique part number. The metadata generator 218 can be configured to generate metadata associated with the unique part number and second metadata associated with the unique part number for the second user. The processor(s) 206 can be configured to communicate the metadata to the device(s) 104 and the second metadata to a second device 104 associated with the second user. The processor(s) 206 can also be configured to receive data associated with a second rendered version of the three-dimensional model 116 from the selected rendering server 134 and communicate the second rendered version data to the second device 104 associated with the second user. In some configurations, the rendered version data 214 can be different from the second rendered version data. In such a manner, different users of the shareable session can view different portions of the three-dimensional model 116 as part of the same shareable session. This can enable a more efficient rendering system, as the selected rendering server 134 can load the portion of the data set 118 associated the three-dimensional model 116 one time and perform multiple rendering operations.

In some aspects, the processor(s) 206 can be configured to request user input to define the data set 118 (or a portion of the data set 118). For example, a user can request that only a specific portion of the three-dimensional model 116 be rendered. To illustrate, if a particular shareable session is concerned primarily with discussing solutions to a particular maintenance issue associated with an electrical system of an aircraft, the user can indicate that only the portions of the three-dimensional model 116 associated with the electrical system be rendered. As another example, the data set 118 can include data associated with multiple versions of the three-dimensional model 116 (e.g., multiple tail numbers of a particular aircraft type). The user can provide data indicative of a request to only view a portion of the data set 118 associated with a particular tail number. In some configurations, the processor(s) 206 can be configured to request user input to exclude a portion of the larger data set 118. For example, the user may only have access to a particular portion of the three-dimensional model 116. The processor(s) 206 can request the user exclude the portions of the data set 118 to which the user does not have access so that the rendering operation can continue. As another example, the load balancing operation described in more detail above with reference to FIG. 1 can indicate certain limitations to the selected rendering server 134. In this example, the selected rendering server 134 may not have sufficient computing resources available to render requested portions of the data set 118. The processor(s) 206 can be configured to request user input excluding a requested portion of the data set 118 so that the rendering operation can continue. If the user input is not provided, the processor(s) 206 can select a second rendering server 134 that can render the requested portions of the data set 118, or provide a notification to the display 142 that the requested portions of the data set 118 cannot be currently rendered to unavailability of appropriate resources when another rendering server 134 that can render the requested portions of the data set 118 is not available.

In some implementations, the computing device 202 can be associated with, integrated into, or otherwise included in one or more electronic devices such as a server, personal computer, etc. The system 200 can also include components not illustrated in FIG. 2. For example, the computing device 202 can also include a receiver configured to receive the input data 210 from the device(s) 104. The receiver can be configured to receive the data, for example, via a computer bus. As an additional example, the system 200 can also include one or more input/output interfaces, one or more network interfaces, etc. Further, although FIG. 2 illustrates the memory 208 of the system 200 as storing certain data, more, fewer, and/or different data can be present within the memory 208 without departing from the scope of the subject disclosure.

Additionally, although FIG. 2 illustrates certain operations occurring within the computing device 202, these operations can be performed by other components of the system 200 without departing from the scope of the subject disclosure. For example, one or more components external to the computing device 202 can be configured to host or otherwise incorporate some or all of the components of the request communicator 114, the data communicator 216, the metadata generator 218, the input data mapper 220, the rendering application monitor 222, or some combination thereof. Such component(s) can be located remotely from the computing device 202 and accessed via a network connection of the computing device 202.

Further, although FIG. 2 illustrates the computing device 202, the device(s) 104, and the rendering servers 134 as separate, other configurations are possible without departing from the scope of the subject disclosure. For example, the computing device 202 and the rendering servers 134 can be integrated into one or more electronic devices configured as a server. The server can be configured to host multiple virtual rendering servers on a single electronic device. As an additional example, one or more components of the computing device 202 can be distributed across a plurality of computing devices (e.g., a group of processor cores).

FIG. 3 illustrates an exemplary user interface 300 depicting a rendered version of the three-dimensional model 116 of FIGs. 1 and 2, in accordance with some examples of the subject disclosure. The user interface 300 includes a browser window 302 that includes a navigation area 320, a model viewing area 316, and a metadata viewing area 304.

The navigation area 320 includes tabs, buttons, pages, other indexing mechanisms, other browser navigation tools, or some combination thereof, configured to allow a user of the user interface 300 to navigate among different portions of the user interface 300. In the example of FIG. 3, the navigation area 320 includes an existing sessions tab 306. Navigating to the existing session tab 306 can allow a user to navigate between or among various sessions for which the user has been authenticated to view three-dimensional data. The navigation area 320 also includes a first session viewing tab 308 and a second session viewing tab 310. The session viewing tabs 308, 310 are each associated with a rendered version of a three-dimensional model (e.g., the three-dimensional model 116 of FIGs. 1 and 2). Alternating between the session viewing tabs 308, 310 can allow the user to switch between rendered versions of three-dimensional models.

In the example of FIG. 3, the user navigated to the first session viewing tab 308. The first session viewing tab 308 includes the model viewing area 316 and the metadata viewing area 304. The model viewing area 316 can include the rendered version 314 of the three-dimensional model (e.g., the three-dimensional model 116 of FIGs. 1 and 2). The metadata viewing area 304 can include one or more metadata items associated with some or all of the rendered three-dimensional model. For example, the metadata viewing area 304 can include the title, part name, part number, and unique identifier for a portion of the rendered version 314.

As described in more detail above with reference to FIG. 2, the system 200 can be configured to receive input data 210 indicating user selected of a portion of the rendered version, map the input data 210 to a unique part number, generate metadata associated with the unique part number, and communicate the metadata to the device(s) 104. The user interface 300 illustrates a state of the user interface 300 after a user has selected a portion of the rendered version 314. For example, the user can click the nose portion of the rendered version 314. This user input can be used (e.g., by the processor(s) 206 of FIG. 2) to map the selected portion to a unique part number. The metadata associated with the selected portion can then be communicated to the device(s) 104 for display to the user. In the example of FIG. 3, the metadata is displayed on the device(s) 104 in the metadata viewing area 304.

FIG. 3 is provided to illustrate a particular portion of the subject disclosure. Other configurations of the user interface 300 could be used without departing from the scope of the subject disclosure. The user interface can include more, fewer, and/or different components than those illustrated in FIG. 3. For example, the user interface 300 may not include the navigation area 320. As another example, the metadata viewing area 304 may not be visible to the user until the user provides input data indicative of the user's desire to see the metadata. As a further example, the rendered version 314 can be provided for display on the user device (e.g., the device(s) 104 of FIGs. 1 and 2) in a web-based application, a thin client application, etc. without departing from the scope of the subject disclosure.

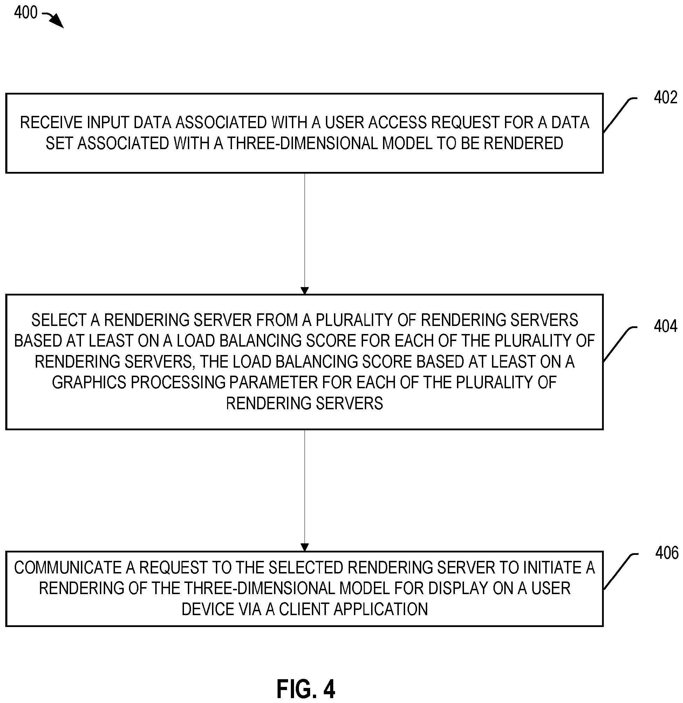

FIG. 4 is a flow chart of an example method 400 for managing access to three-dimensional data, in accordance with some examples of the subject disclosure. The method 400 can be initiated, performed, or controlled by one or more processors executing instructions, such as by the processor(s) 106 of FIG. 1 executing instructions from the memory 108.

In some implementations, the method 400 includes, at block 402, receiving input data associated with a user access request for a data set associated with a three-dimensional model to be rendered. For example, the processor(s) 106 of FIG. 1 can receive the input data 130 associated with the user access request 132 for the data set 118 associated with the three-dimensional model 116 to be rendered.

The method 400 includes, at block 404, selecting a rendering server from a plurality of rendering servers based at least on a load balancing score for each of the plurality of rendering servers. The load balancing score is based at least on a graphics processing parameter for each of the plurality of rendering servers. For example, the processor(s) 106 of FIG. 1 can select a particular rendering server 134 from the plurality of rendering servers 134 based at least on the load balancing score 120 for each of the plurality of rendering servers 134. The load balancing score 120 can be based at least on the graphics processing parameter 122 for each of the plurality of rendering servers 134.

The method 400 also includes, at block 406, communicating a request to the selected rendering server to initiate a rendering of the three-dimensional model for display via a client application. For example, the processor(s) 106 of FIG. 1 can communicate the request 144 to the selected rendering server 134 to initiate a rendering of the three-dimensional model 116 for presentation to the display 142 of the device(s) 104 via the client application 140.

In some implementations, the method 400 can include more, fewer, and/or different steps without departing from the scope of the subject disclosure. For example, the method 400 can also include authenticating user access at one or more points. In a particular configuration, the method 400 can perform a first user authentication, authenticating a user's ability to access the system generally. The method 400 can also perform a second user authentication, authenticating the user's ability to access one or more particular portions of the data associated with the rendered model, as described in more detail above with reference to FIGs. 1-3.

Further, the methods described above with reference to FIGS. 1-3 can be implemented to realize one or more of the technical advantages described in more detail above. For example, the method 400 can enable load balancing of a plurality of rendering servers based on one or more graphics processing metrics.

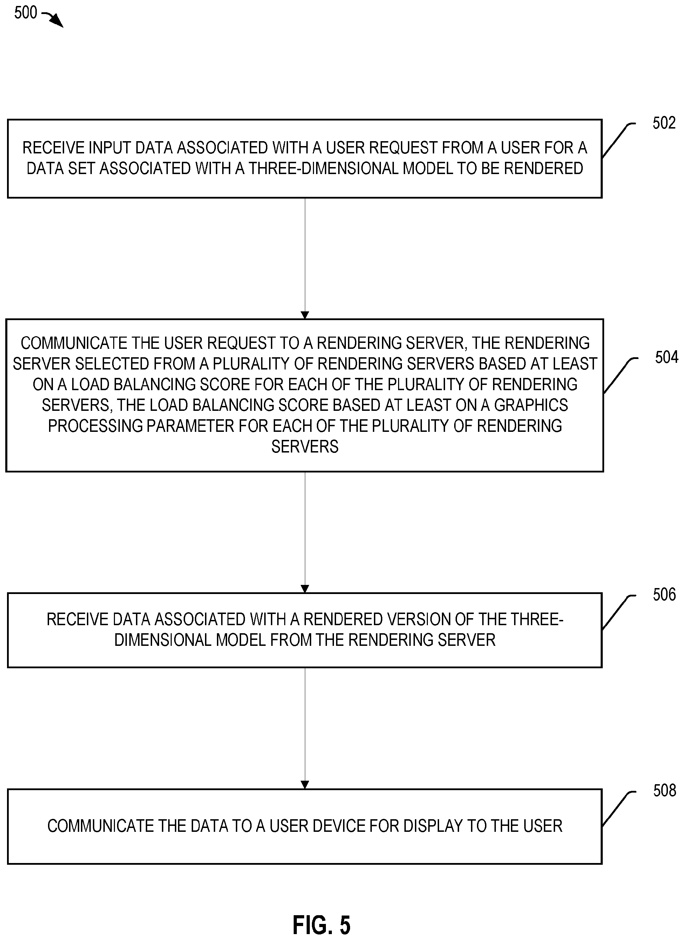

FIG. 5 is a flow chart of an example method 500 for managing three-dimensional data visualization, in accordance with some examples of the subject disclosure. The method 500 can be initiated, performed, or controlled by one or more processors executing instructions, such as by the processor(s) 206 of FIG. 2 executing instructions from the memory 208.

In some implementations, the method 500 includes, at block 502, receiving input data associated with a user request from a user for a data set associated with a three-dimensional model to be rendered. For example, the processor(s) 206 of FIG. 2 can receive the input data 210 associated with the user request 212 from a user for the data set 118 associated with the three-dimensional model 116 to be rendered.

The method 500 includes, at block 504, communicating the user request to a rendering server. The rendering server is selected from a plurality of rendering servers based at least on a load balancing score for each of the plurality of rendering servers. The load balancing score is based at least on a graphics processing parameter for each of the plurality of rendering servers. For example, the processor(s) 206 of FIG. 2 can communicate the user request 212 to a particular rendering server 134. The particular rendering server 134 is selected from a plurality of rendering servers 134 based at least on the load balancing score 120 for each of the plurality of rendering servers 134. The load balancing score 120 can be based at least on the graphics processing parameters 122 for each of the plurality of rendering servers 134.

The method 500 includes, at block 506, receiving data associated with a rendered version of the three-dimensional model from the rendering server. For example, the processor(s) 206 of FIG. 2 can receive the rendered version data 214 associated with a rendered version of the three-dimensional model 116 from the rendering server 134.

The method 500 also includes, at block 508, communicating the data to a client for display to the user. For example, the processor(s) 206 of FIG. 2 can communicate the rendered version data 214 to the client application 140 for presentation to the user via the display 142.

In some implementations, the method 500 can include more, fewer, and/or different steps without departing from the scope of the subject disclosure. For example, the method 500 can include receiving input data indicating user selection of a portion of the rendered version, mapping the input data to a unique part number, generating metadata associated with the unique part number, and communicating the metadata to the client. The method 500 can also include monitoring a rendering application on the render server and, responsive to detecting that the rendering application has unexpectedly stopped responding, restarting the rendering application. The method 500 can also include authenticating user access at one or more points. In a particular configuration, the method 500 can perform a first user authentication, authenticating a user's ability to access the system generally. The method 500 can also perform a second user authentication, authenticating the user's ability to access one or more particular portions of the data associated with the rendered model, as described in more detail above with reference to FIGs. 1-4.

Further, the methods described above with reference to FIGS. 1-3 can be implemented to realize one or more of the technical advantages described in more detail above. For example, the method 500 can enable an improved user experience for accessing three-dimensional data by, for example, enabling multiple users in multiple environments to each gain secure access to a three-dimensional data set for collaboration.

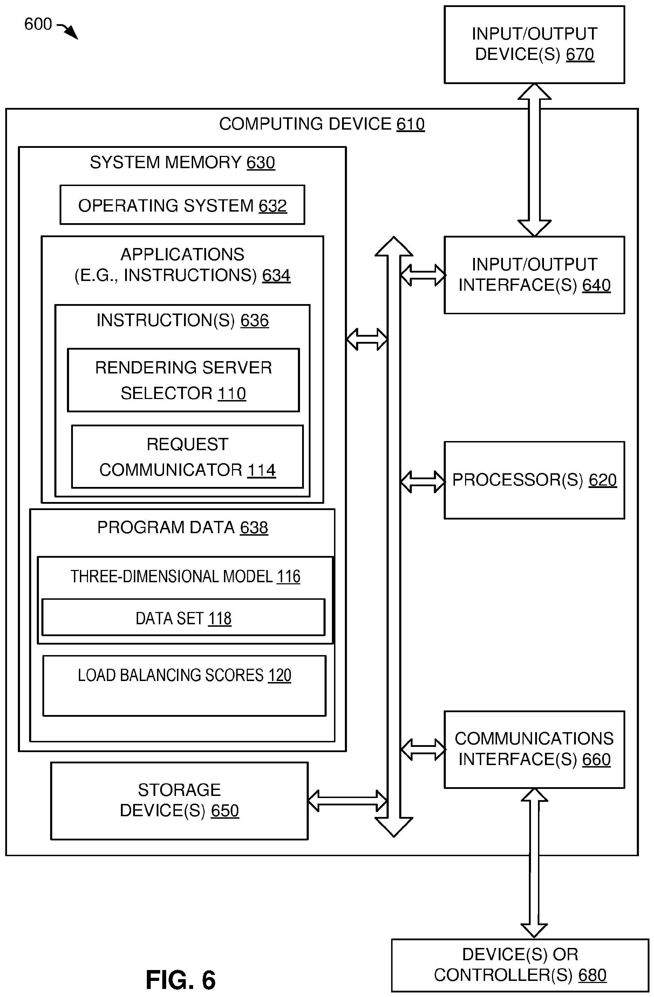

FIG. 6 is a block diagram of a computing environment 600 including a computing device 610 configured to support aspects of computer-implemented methods and computer-executable program instructions (or code), in accordance with some examples of the subject disclosure. For example, the computing device 610, or portions thereof, is configured to execute instructions to initiate, perform, or control one or more operations described in more detail above with reference to FIGs. 1-5. In a particular aspect, the computing device 610 can include, correspond to, or be included within the computing device 102, the device(s) 104, the rendering server(s) 134, and/or the client application 140 of FIG. 1, the computing device 202 of FIG. 2, one or more servers, one or more virtual devices, or a combination thereof.

The computing device 610 includes one or more processors 620. In a particular aspect, the processor(s) 620 corresponds to the processor(s) 106 of FIG. 1. The processor(s) 620 are configured to communicate with system memory 630, one or more storage devices 650, one or more input/output interfaces 640, one or more communications interfaces 660, or any combination thereof. The system memory 630 includes volatile memory devices (e.g., random access memory (RAM) devices), nonvolatile memory devices (e.g., read-only memory (ROM) devices, programmable read-only memory, and flash memory), or both. The system memory 630 stores an operating system 632, which can include a basic input/output system for booting the computing device 610 as well as a full operating system to enable the computing device 610 to interact with users, other programs, and other devices. The system memory 630 stores system (program) data 638, such as the three-dimensional model 116, the data set 118, the load balancing scores 120 of FIGs. 1 and 2, or a combination thereof.

The system memory 630 includes one or more applications 634 (e.g., sets of instructions) executable by the processor(s) 620, such as the rendering server selector 110 and request communicator 114 of FIGs. 1 and 2. As an example, the one or more applications 634 include the instructions 636 executable by the processor(s) 620 to initiate, control, or perform one or more operations described with reference to FIGS 1-5. To illustrate, the one or more applications 634 include the instructions 636 executable by the processor(s) 620 to initiate, control, or perform one or more operations described with reference to receiving the input data 130 of FIG. 1, selecting the rendering server 134 based on the load balancing score 120, and communicating the request 144 to the selected rendering server 134 to initiate a rendering of the three-dimensional model 116 for display on the client application 140. As another illustration, the one or more applications 634 include the instructions 636 executable by the processor(s) 620 to initiate, control, or perform one or more operations described with reference to receiving the input data 210 of FIG. 2, communicating the user request 212 to the selected rendering server 134, receiving the rendered version data 214 from the rendering server 134, and communicating the rendered version data 214 to the client application 140.

In a particular implementation, the system memory 630 includes a non-transitory, computer readable medium (e.g., a computer-readable storage device) storing the instructions 636 that, when executed by the processor(s) 620, cause the processor(s) 620 to initiate, perform, or control operations for managing access to three-dimensional data. The operations include receiving input data associated with a user access request for a data set associated with a three-dimensional model to be rendered. The operations also include selecting a rendering server from a plurality of rendering servers based at least on a load balancing score for each of the plurality of rendering servers, the load balancing score based at least on a graphics processing parameter for each of the plurality of rendering servers. The operations also include communicating a request to the selected rendering server to initiate a rendering of the three-dimensional model for display on a user device via a client application.

In the same or alternative particular implementations, the system memory 630 includes a non-transitory, computer readable medium (e.g., a computer-readable storage device) storing the instructions 636 that, when executed by the processor(s) 620, cause the processor(s) 620 to initiate, perform, or control operations for managing three-dimensional data visualization. The operations include receiving input data associated with a user request from a user for a data set associated with a three-dimensional model to be rendered. The operations also include communicating the user request to a rendering server, the rendering server selected from a plurality of rendering servers based at least on a load balancing score for each of the plurality of rendering servers, the load balancing score based at least on a graphics processing parameter for each of the plurality of rendering servers. The operations also include receiving data associated with a rendered version of the three-dimensional model from the rendering server. The operations also include communicating the data to a client for display to the user.

The one or more storage devices 650 include nonvolatile storage devices, such as magnetic disks, optical disks, or flash memory devices. In a particular example, the storage devices 650 include both removable and non-removable memory devices. The storage devices 650 are configured to store an operating system, images of operating systems, applications (e.g., one or more of the applications 634), and program data (e.g., the program data 638). In a particular aspect, the system memory 630, the storage devices 650, or both, include tangible computer-readable media. In a particular aspect, one or more of the storage devices 650 are external to the computing device 610.

The one or more input/output interfaces 640 enable the computing device 610 to communicate with one or more input/output devices 670 to facilitate user interaction. For example, the one or more input/output interfaces 640 can include a display interface, an input interface, or both. For example, the input/output interface 640 is adapted to receive input from a user, to receive input from another computing device, or a combination thereof. In some implementations, the input/output interface 640 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some implementations, the input/output device(s) 670 includes one or more user interface devices and displays, including some combination of buttons, keyboards, pointing devices, displays, speakers, microphones, touch screens, and other devices.

The processor(s) 620 are configured to communicate with devices or controllers 680 via the one or more communications interfaces 660. For example, the one or more communications interfaces 660 can include a network interface. The devices or controllers 680 can include, for example, the device(s) 104 of FIGs. 1 and 2, the rendering server(s) 134, the client application 140, or some combination thereof.

In some implementations, a non-transitory, computer readable medium (e.g., a computer-readable storage device) stores instructions that, when executed by one or more processors, cause the one or more processors to initiate, perform, or control operations to perform part of or all the functionality described above. For example, the instructions can be executable to implement one or more of the operations or methods of FIGs. 1-5. In some implementations, part or all of one or more of the operations or methods of FIGs. 1-5 can be implemented by one or more processors (e.g., one or more central processing units (CPUs), one or more graphics processing units (GPUs), one or more digital signal processors (DSPs)) executing instructions, by dedicated hardware circuitry, or any combination thereof.

The illustrations of the examples described herein are intended to provide a general understanding of the structure of the various implementations. The illustrations are not intended to serve as a complete description of all of the elements and features of apparatus and systems that utilize the structures or methods described herein. Many other implementations can be apparent to those of skill in the art upon reviewing the disclosure. Other implementations can be utilized and derived from the disclosure, such that structural and logical substitutions and changes can be made without departing from the scope of the disclosure. For example, method operations can be performed in a different order than shown in the figures or one or more method operations can be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results can be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features can be grouped together or described in a single implementation for the purpose of streamlining the disclosure. Examples described above illustrate but do not limit the disclosure. It should also be understood that numerous modifications and variations are possible in accordance with the principles of the subject disclosure. As the following claims reflect, the claimed subject matter can be directed to less than all of the features of any of the disclosed examples. Accordingly, the scope of the disclosure is defined by the following claims and their equivalents.

Further, the disclosure comprises embodiments according to the following examples:

According to Example 1, a method includes receiving input data associated with a user access request for a data set associated with a three-dimensional model to be rendered; selecting a rendering server from a plurality of rendering servers based at least on a load balancing score for each of the plurality of rendering servers, the load balancing score based at least on a graphics processing parameter for each of the plurality of rendering servers; and communicating a request to the selected rendering server to initiate a rendering of the three-dimensional model for display on a user device via a client application.

Example 2 includes the method of Example 1, wherein the load balancing score is based on a network latency parameter for a network coupled to the plurality of rendering servers, a general processing parameter for each of the plurality of rendering servers, a general processing memory parameter for each of the plurality of rendering servers, a graphics processing memory parameter for each of the plurality of rendering servers, or a combination thereof.

Example 3 includes the method of Example 2, wherein the load balancing score is based at least on a capacity parameter for each of the plurality of rendering servers, the capacity parameter associated with the general processing parameter, the general processing memory parameter, the graphics processing memory parameter, the graphics processing parameter, or a combination thereof.

Example 4 includes the method of Example 2 or Example 3, wherein the load balancing score is based at least on a current usage parameter for each of the plurality of rendering servers, the current usage parameter associated with the general processing parameter, the general processing memory parameter, the graphics processing memory parameter, the graphics processing parameter, the network latency parameter, or a combination thereof.

Example 5 includes the method of any of Examples 1 to 4, and further includes, prior to receiving the input data, receiving a user authentication associated with the user access request from a user authentication application, the user authentication application coupled to the rendering server.

Example 6 includes the method of Example 5, and further includes communicating authentication data to the rendering server, the authentication data associated with one or more objects of the three-dimensional model that can be selectively rendered based on the authentication data.

Example 7 includes the method of any of Examples 1 to 6, wherein communicating the request to the selected rendering server comprises communicating the request to the selected rendering server to initiate a rendering of the three-dimensional model for display at a client application.

According to Example 8, a system includes one or more processors configured to: receive input data associated with a user access request for a data set associated with a three-dimensional model to be rendered; select a rendering server from a plurality of rendering servers based at least on a load balancing score for each of the plurality of rendering servers, the load balancing score based at least on a graphics processing parameter for each of the plurality of rendering servers; and communicate a request to the selected rendering server to initiate a rendering of the three-dimensional model for display on a user device via a client application.

Example 9 includes the system of Example 8, wherein the load balancing score is based on a network latency parameter for a network coupled to the plurality of rendering servers, a general processing parameter for each of the plurality of rendering servers, a general processing memory parameter for each of the plurality of rendering servers, a graphics processing memory parameter for each of the plurality of rendering servers, or a combination thereof.

Example 10 includes the system of Example 8, wherein the load balancing score is based at least on a capacity parameter for each of the plurality of rendering servers, the capacity parameter associated with the general processing parameter, the general processing memory parameter, the graphics processing memory parameter, the graphics processing parameter, or a combination thereof.

Example 11 includes the system of claim 9 or claim 10, wherein the load balancing score is based at least on a current usage parameter for each of the plurality of rendering servers, the current usage parameter associated with the general processing parameter, the general processing memory parameter, the graphics processing memory parameter, the graphics processing parameter, the network latency parameter, or a combination thereof.

Example 12 includes the system of any of Examples 8 to 11, wherein the one or more processors are further configured to receive a user authentication associated with the user access request from an authentication server coupled to the rendering server.

Example 13 includes the system of Example 12, wherein the one or more processors are further configured to communicate authentication data to the rendering server, the authentication data associated with one or more objects of the three-dimensional model that can be selectively rendered based on the authentication data.

Example 14 includes the system of any of Examples 8 to 13, wherein the one or more processors are configured to communicate the request to the selected rendering server including communicating the request to the selected rendering server to initiate a rendering of the three-dimensional model for display at a client application.

According to Example 15, a non-transitory, computer-readable medium comprising instructions that, when executed by one or more processors, cause the one or more processors to: receive input data associated with a user access request for a data set associated with a three-dimensional model to be rendered; select a rendering server from a plurality of rendering servers based at least on a load balancing score for each of the plurality of rendering servers, the load balancing score based at least on a graphics processing parameter for each of the plurality of rendering servers; and communicate a request to the selected rendering server to initiate a rendering of the three-dimensional model for display on a user device via a client application.

Example 16 includes the non-transitory, computer-readable medium of Example 15, wherein the load balancing score is based on a network latency parameter for a network coupled to the plurality of rendering servers, a general processing parameter for each of the plurality of rendering servers, a general processing memory parameter for each of the plurality of rendering servers, a graphics processing memory parameter for each of the plurality of rendering servers, or a combination thereof.

Example 17 includes the non-transitory, computer-readable medium of Example 16, wherein the load balancing score is based at least on a capacity parameter for each of the plurality of rendering servers, the capacity parameter associated with the general processing parameter, the general processing memory parameter, the graphics processing memory parameter, the graphics processing parameter, or a combination thereof.

Example 18 includes the non-transitory, computer-readable medium of Example 16 or Example 17, wherein the load balancing score is based at least on a current usage parameter for each of the plurality of rendering servers, the current usage parameter associated with the general processing parameter, the general processing memory parameter, the graphics processing memory parameter, the graphics processing parameter, the network latency parameter, or a combination thereof.

Example 19 includes the non-transitory, computer-readable medium of any of Examples 15 to 18, wherein the one or more processors are further configured to receive a user authentication associated with the user access request from an authentication server coupled to the rendering server.

Example 20 includes the non-transitory, computer-readable medium of Example 19, wherein the one or more processors are further configured to communicate authentication data to the rendering server, the authentication data associated with one or more objects of the three-dimensional model that can be selectively rendered based on the authentication data.

Example 21. A method includes receiving input data associated with a user request from a user for a data set associated with a three-dimensional model to be rendered; communicating the user request to a rendering server, the rendering server selected from a plurality of rendering servers based at least on a load balancing score for each of the plurality of rendering servers, the load balancing score based at least on a graphics processing parameter for each of the plurality of rendering servers; receiving data associated with a rendered version of the three-dimensional model from the rendering server; and communicating the data to a user device for display to the user.

Example 22 includes the method of Example 21, and further includes: receiving input data indicating user selection of a portion of the rendered version; mapping the input data to a unique part number; generating metadata associated with the unique part number; and communicating the metadata to the user device.

Example 23 includes the method of Example 21 or Example 22, and further includes: monitoring a rendering application on the rendering server; and responsive to detecting that the rendering application has unexpectedly stopped responding, restarting the rendering application.

Example 24 includes the method of any of Examples 21 to 23, and further includes, receiving a user authentication associated with the user access request from an authentication server coupled to the rendering server.

Example 25 includes the method of Example 24, and further includes communicating authentication data to the rendering server, the authentication data associated with one or more objects of the three-dimensional model that can be selectively rendered based on the authentication data.

Example 26 includes the method of Example 24 or Example 25, and further includes generating a shareable session that includes the data associated with the rendered version.

Example 27 includes the method of Example 26, and further includes receiving, from the user authentication application, a second user authentication associated with a second user request from a second user for the data set.

Example 28 includes the method of Example 27, and further includes: receiving input data indicating user selection of a portion of the rendered version; mapping the input data to a unique part number; generating metadata associated with the unique part number; generating second metadata associated with the unique part number for the second user; communicating the metadata to the user device; and communicating the second metadata to a second user device associated with the second user.

Example 29 includes the method of Example 27 or Example 28, and further includes: receiving data associated with a second rendered version of the three-dimensional model from the rendering server; and communicating the data to a second user device for display to the second user.

Example 30 includes the method of Example 29, wherein the rendered version is different from the second rendered version.

Example 31 includes the method of any of Examples 21 to 30, and further includes requesting user input to define the data set.

Example 32 includes the method of Example 31, wherein requesting the user input to define the data set comprises requesting user input to exclude a portion of a larger data set.

Example 33 includes the method of any of Examples 21 to 32, wherein the data communicated to the user device does not include geometry data associated with the three-dimensional model.

Example 34 includes the method of any of Examples 21 to 33, wherein the data associated with the rendered version of the three-dimensional model does not include geometry data associated with the three-dimensional model.

According to Example 35, a system includes one or more processors configured to: receive input data associated with a user request from a user for a data set associated with a three-dimensional model to be rendered; communicate the user request to a rendering server, the rendering server selected from a plurality of rendering servers based at least on a load balancing score for each of the plurality of rendering servers, the load balancing score based at least on a graphics processing parameter for each of the plurality of rendering servers; receive data associated with a rendered version of the three-dimensional model from the rendering server; and communicate the data to a user device for display to the user.

Example 36 includes the system of Example 35, wherein the one or more processors are further configured to receive input data indicating user selection of a portion of the rendered version; map the input data to a unique part number; generate metadata associated with the unique part number; and communicate the metadata to the user device.

Example 37 includes the system of Example 35 or Example 36, wherein the one or more processors are further configured to monitor a rendering application on the rendering server; and responsive to detecting that the rendering application has unexpectedly stopped responding, restart the rendering application.

Example 38 includes the system of any of Examples 35 to 37, wherein the one or more processors are further configured to request user input to define the data set.

Example 39 includes the system of any of Examples 35 to 38, wherein the data communicated to the user device or the rendered version of the three-dimensional model does not include geometry data associated with the three-dimensional model.

According to Example 40, a non-transitory, computer-readable medium comprising instructions that, when executed by one or more processors, cause the one or more processors to: receive input data associated with a user request from a user for a data set associated with a three-dimensional model to be rendered; communicate the user request to a rendering server, the rendering server selected from a plurality of rendering servers based at least on a load balancing score for each of the plurality of rendering servers, the load balancing score based at least on a graphics processing parameter for each of the plurality of rendering servers; receive data associated with a rendered version of the three-dimensional model from the rendering server; and communicate the data to a user device for display to the user.

## Claims

1. A computer-implemented method (400) comprising:

   receiving (402) input data (130; 210) associated with a user access request (132; 212) for a data set (118) associated with a three-dimensional model (116) to be rendered;
   selecting (404) a rendering server (134) from a plurality of rendering servers (134) based at least on a load balancing score (120) for each of the plurality of rendering servers (134), the load balancing score (120) being based at least on a graphics processing parameter (122) for each of the plurality of rendering servers (134); and
   communicating (406) a request (144; 212) to the selected rendering server (134) to initiate a rendering of the three-dimensional model (116) for display on a user device (104) via a client application (140).

2. The method (400) of claim 1, wherein the load balancing score (120) is based on a network latency parameter (124) for a network coupled to the plurality of rendering servers (134), a general processing parameter for each of the plurality of rendering servers (134), a general processing memory parameter (128) for each of the plurality of rendering servers (134), a graphics processing memory parameter (126) for each of the plurality of rendering servers (134), or a combination thereof.

3. The method (400) of claim 2, wherein the load balancing score (120) is based at least on a capacity parameter for each of the plurality of rendering servers (134), the capacity parameter being associated with the general processing parameter, the general processing memory parameter (128), the graphics processing memory parameter (126), the graphics processing parameter (122), or a combination thereof.

4. The method (400) of claim 2 or 3, wherein the load balancing score (120) is based at least on a current usage parameter for each of the plurality of rendering servers (134), the current usage parameter associated with the general processing parameter, the general processing memory parameter (128), the graphics processing memory parameter (126), the graphics processing parameter (122), the network latency parameter (124), or a combination thereof.

5. The method (400) of any one claims 1 to 4, further comprising, receiving a user authentication associated with the user access request (132; 212) from an authentication server (137), the user authentication server (137) being coupled to the rendering server (134).

6. The method (400) of claim 5, further comprising communicating authentication data to the selected rendering server (134), the authentication data associated with one or more objects of the three-dimensional model (116) that can be selectively rendered based on the authentication data.

7. The method (400) of any one of claims 1 to 6, further comprising:

   performing a first user authentication for authenticating a users' ability to access the system (400) generally; and
   performing a second user authentication for authenticating the users's ability to access one or more particular portions of data associated with the rendered three-dimensional model (116).

8. A system (100; 200) for managing access to three-dimensional data, said system (100; 200) comprising:
   one or more processors (106; 206) configured to:

   receive input data (130; 210) associated with a user access request (132; 212) for a data set (118) associated with a three-dimensional model (116) to be rendered;
   select a rendering server (134) from a plurality of rendering servers (134) based at least on a load balancing score (120) for each of the plurality of rendering servers (134), the load balancing score (120) being based at least on a graphics processing parameter (122) for each of the plurality of rendering servers (134); and
   communicate a request (144; 212) to the selected rendering server (134) to initiate a rendering of the three-dimensional model (116) for display on a user device (104) via a client application (140).

9. The system (100; 200) of claim 8, wherein the load balancing score (120) is based on a network latency parameter (124) for a network coupled to the plurality of rendering servers (134), a general processing parameter for each of the plurality of rendering servers (134), a general processing memory parameter (128) for each of the plurality of rendering servers (134), a graphics processing memory parameter (126) for each of the plurality of rendering servers (134), or a combination thereof.

10. The system (100; 200) of claim 9, wherein the load balancing score (120) is based at least on a capacity parameter for each of the plurality of rendering servers (134), the capacity parameter being associated with the general processing parameter, the general processing memory parameter (128), the graphics processing memory parameter (126), the graphics processing parameter (122), or a combination thereof.

11. The system (100; 200) of claim 9 or 10, wherein the load balancing score (120) is based at least on a current usage parameter for each of the plurality of rendering servers (134), the current usage parameter being associated with the general processing parameter, the general processing memory parameter (128), the graphics processing memory parameter (126), the graphics processing parameter (122), the network latency parameter (124), or a combination thereof.

12. The system (100; 200) of any one of claims 8 to 11, wherein the one or more processors (106; 206) are further configured to receive a user authentication associated with the user access request (132; 212) from an authentication server (137) coupled to the rendering server (134).

13. The system (100; 200) of claim 12, wherein the one or more processors (106; 206) are further configured to communicate authentication data to the selected rendering server (134), the authentication data being associated with one or more objects of the three-dimensional model (116) that are configured to be selectively rendered based on the authentication data.

14. The system (100; 200) of claim 8, wherein the one or more processors (106; 206) are configured to receive user authentication information from an authentication server (137) prior to receiving input data (130).

15. A non-transitory, computer-readable medium (108; 208 630) comprising instructions (634) that, when executed by one or more processors (106; 206; 620), cause the one or more processors (106; 206; 620) to perform the method (400) according to any one of the claims 1 to 7.

100

INPUT DATA 130

COMPUTING DEVICE 102

PROCESSOR(S) 106

RENDERING SERVER SELECTOR 110

IDENTIFIER 112

REQUEST COMMUNICATOR 114

MEMORY 108

DATA SET 118

THREE-DIMENSIONAL MODEL 116

LOAD BALANCING SCORES 120

GRAPHICS PROCESSING PARAMETERS 122

NETWORK LATENCY PARAMETERS 124

GRAPHICS PROCESSING MEMORY PARAMETERS 126

GENERAL PROCESSING MEMORY PARAMETERS 128

DEVICE(S) 104

MEMORY 136

USER ACCESS REQUEST 132

PROCESSOR(S) 139

CLIENT APPLICATION 140

DISPLAY 142

AUTHENTICATION SERVER(S) 137

RENDERING SERVERS 134

RENDERING APPLICATION 138

REQUEST 144

**FIG. 1**

200

**COMPUTING DEVICE 202**

**PROCESSOR(S) 206**

DATA COMMUNICATOR 216

METADATA GENERATOR 218

INPUT DATA MAPPER 220

RENDERING APPLICATION MONITOR 222

REQUEST COMMUNICATOR 114

**MEMORY 208**

DATA SET 118

THREE-DIMENSIONAL MODEL 116

LOAD BALANCING SCORES 120

GRAPHICS PROCESSING PARAMETERS 122

NETWORK LATENCY PARAMETERS 124

GRAPHICS PROCESSING MEMORY PARAMETERS 126

GENERAL PROCESSING MEMORY PARAMETERS 128

INPUT DATA 210

**DEVICE(S) 104**

MEMORY 136

USER REQUEST 212

PROCESSOR(S) 139

CLIENT APPLICATION 140

DISPLAY 142

RENDERED VERSION DATA 214

AUTHENTICATION SERVER 137

RENDERED VERSION DATA 214

RENDERING SERVER 134

RENDERING APPLICATION 138

USER REQUEST 212

**FIG. 2**

EP 4 633 087 A1

FIG. 3

400

402

RECEIVE INPUT DATA ASSOCIATED WITH A USER ACCESS REQUEST FOR A DATA SET ASSOCIATED WITH A THREE-DIMENSIONAL MODEL TO BE RENDERED

404

SELECT A RENDERING SERVER FROM A PLURALITY OF RENDERING SERVERS BASED AT LEAST ON A LOAD BALANCING SCORE FOR EACH OF THE PLURALITY OF RENDERING SERVERS, THE LOAD BALANCING SCORE BASED AT LEAST ON A GRAPHICS PROCESSING PARAMETER FOR EACH OF THE PLURALITY OF RENDERING SERVERS

406

COMMUNICATE A REQUEST TO THE SELECTED RENDERING SERVER TO INITIATE A RENDERING OF THE THREE-DIMENSIONAL MODEL FOR DISPLAY ON A USER DEVICE VIA A CLIENT APPLICATION

FIG. 4

500

```
502  RECEIVE INPUT DATA ASSOCIATED WITH A USER REQUEST FROM A USER FOR A
     DATA SET ASSOCIATED WITH A THREE-DIMENSIONAL MODEL TO BE RENDERED
```

```
504  COMMUNICATE THE USER REQUEST TO A RENDERING SERVER, THE RENDERING
     SERVER SELECTED FROM A PLURALITY OF RENDERING SERVERS BASED AT LEAST
     ON A LOAD BALANCING SCORE FOR EACH OF THE PLURALITY OF RENDERING
     SERVERS, THE LOAD BALANCING SCORE BASED AT LEAST ON A GRAPHICS
     PROCESSING PARAMETER FOR EACH OF THE PLURALITY OF RENDERING
     SERVERS
```

```
506  RECEIVE DATA ASSOCIATED WITH A RENDERED VERSION OF THE THREE-
     DIMENSIONAL MODEL FROM THE RENDERING SERVER
```

```
508  COMMUNICATE THE DATA TO A USER DEVICE FOR DISPLAY TO THE USER
```

FIG. 5

600 ⤸

## COMPUTING DEVICE 610

### SYSTEM MEMORY 630

OPERATING SYSTEM 632

APPLICATIONS
(E.G., INSTRUCTIONS) 634

INSTRUCTION(S) 636

RENDERING SERVER
SELECTOR 110

REQUEST
COMMUNICATOR 114

PROGRAM DATA 638

THREE-DIMENSIONAL MODEL 116

DATA SET 118

LOAD BALANCING SCORES 120

STORAGE
DEVICE(S) 650

INPUT/OUTPUT
DEVICE(S) 670

INPUT/OUTPUT
INTERFACE(S) 640

PROCESSOR(S) 620

COMMUNICATIONS
INTERFACE(S) 660

DEVICE(S) OR
CONTROLLER(S) 680

## FIG. 6

Europäisches
Patentamt
European
Patent Office
Office européen
des brevets

## EUROPEAN SEARCH REPORT

**Application Number**

EP 25 16 6054

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/227934 A1 (SHARP TOBY [GB]) 22 September 2011 (2011-09-22) * figures 1,2 * * paragraph [0001] - paragraph [0003] * * paragraph [0025] - paragraph [0031] * ----- | 1-15 | INV. H04L9/40 |
| A | US 2019/196858 A1 (CHAKRABORTY PARAG [US] ET AL) 27 June 2019 (2019-06-27) * figure 12 * * paragraph [0003] * * paragraph [0100] - paragraph [0103] * ----- | 1-15 | |
| A | CN 103 281 345 A (CUDATEC DEV CO LTD) 4 September 2013 (2013-09-04) * figures 1, 11,12 * * claims 9,10 * * paragraph [0037] * * paragraph [0051] * * paragraph [0055] * ----- | 1-15 | |

**TECHNICAL FIELDS SEARCHED (IPC)**

H04L

The present search report has been drawn up for all claims

| Place of search | Date of completion of the search | Examiner |
|---|---|---|
| Munich | 23 July 2025 | Pohl, Daniel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................................
& : member of the same patent family, corresponding
    document

EPO FORM 1503 03.82 (P04C01)

EP 4 633 087 A1

## ANNEX TO THE EUROPEAN SEARCH REPORT
## ON EUROPEAN PATENT APPLICATION NO.

EP 25 16 6054

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2025

| Patent document cited in search report | Publication date | Patent family member(s) | Publication date |
|---|---|---|---|
| US 2011227934 A1 | 22-09-2011 | NONE | |
| US 2019196858 A1 | 27-06-2019 | CN 102946409 A | 27-02-2013 |
| | | EP 2766817 A1 | 20-08-2014 |
| | | JP 6329484 B2 | 23-05-2018 |
| | | JP 2014530441 A | 17-11-2014 |
| | | KR 20140079402 A | 26-06-2014 |
| | | US 2013093776 A1 | 18-04-2013 |
| | | US 2019196858 A1 | 27-06-2019 |
| | | WO 2013056204 A1 | 18-04-2013 |
| CN 103281345 A | 04-09-2013 | NONE | |

EPO FORM P0459

For more details about this annex : see Official Journal of the European Patent Office, No. 12/82